(19) **Europäisches Patentamt / European Patent Office / Office européen des brevets**

(11) **EP 4 734 283 A1**

(12) **EUROPEAN PATENT APPLICATION**
published in accordance with Art. 153(4) EPC

(43) Date of publication:
**29.04.2026   Bulletin 2026/18**

(21) Application number: **24831380.1**

(22) Date of filing: **18.04.2024**

(51) International Patent Classification (IPC):
**H01Q 3/24** (2006.01)      **G01S 7/02** (2006.01)

(52) Cooperative Patent Classification (CPC):
**G01S 7/02; H01Q 3/24; H01Q 3/26; H01Q 21/06**

(86) International application number:
**PCT/JP2024/015389**

(87) International publication number:
**WO 2025/004505 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **26.06.2023   JP 2023104327**

(71) Applicant: **Japan Aerospace Exploration Agency
Tokyo 182-8522 (JP)**

(72) Inventors:
• **MAEDA, Takashi**
  **Chofu-shi, Tokyo 182-8522 (JP)**
• **TOMII, Naoya**
  **Chofu-shi, Tokyo 182-8522 (JP)**
• **KOBAYASHI, Yuta**
  **Chofu-shi, Tokyo 182-8522 (JP)**

(74) Representative: **Betten & Resch
Patent- und Rechtsanwälte PartGmbB
Maximiliansplatz 14
80333 München (DE)**

(54) **PHASED ARRAY ANTENNA DEVICE**

(57)   This phased array antenna device comprises: a plurality of real elements; a signal processing unit provided for each real element to convert an analog signal received by the real element into digital signal data; a data processing unit which is provided for each real element and which, for each real element and each virtual element assumed to be located within a predetermined range of the real element, subjects data output from the signal processing unit to delay processing based on the positions and orientation directions of the real element and the virtual element; and an adding unit that performs addition processing of the data from the plurality of real elements after the delay processing and the data from the plurality of virtual elements after the delay processing.

FIG. 4

**Description**

Technical Field

The present invention mainly relates to a phased array antenna device for receiving microwaves.

Background Art

Conventionally, a technique of narrowing an orientation range (beam width) of an antenna that receives radio waves and continuously changing an orientation direction is essential for obtaining an observable distribution with high spatial resolution, for example, in microwave remote sensing. As a specific method of this technique, it is conceivable to (1) rotate a reflecting mirror to which an antenna is attached, and (2) configure a phased array antenna with multiple antenna elements and synthesize signals received from the respective antenna elements with a time difference according to an orientation direction.

In the case of satellite observation, the spatial resolution is preferably high in order to obtain distribution of observables with high resolution.

In the case of using visible rays or infrared rays having a much higher frequency (shorter wavelength) than radio waves, an intensity distribution of signals observed with a spatial resolution of several m at maximum can be obtained even in the conventional technique. However, even in the case of using visible rays or infrared rays, the intensity distribution of the observed signals with respect to information on an object under the cloud or information on an object at night in the case of visible rays cannot be obtained.

On the other hand, in the case of using radio waves having a longer wavelength than visible rays or infrared rays, the intensity distribution of the observation target can be obtained by the spatial resolution of the antenna even for the information on the object under the cloud or the information on the object at night. However, the conventional technique using radio waves has a problem of low spatial resolution. Therefore, it has been required to solve the problem of the conventional technique by increasing the spatial resolution.

As the phased array antenna device of the above (2), the phased array antenna device described in Patent Literature 1 has been proposed by the present applicant. Patent Literature 1 states that "A phased array antenna device directly A/D-converts an analog signal of an antenna amplified by an amplifier via BPF. Then, after conversion into complex frequency data by FFT, cross spectrum calculation is performed. In order to detect a weak electromagnetic wave, the FFT is repeatedly executed over a long period of time, and finally integration is performed".

Citation List

Patent Literature

Patent Literature 1: JP 2021-93679 A

Summary of Invention

Technical Problem

In order to observe the intensity of the radio wave with high spatial resolution, (1) requires a large rotating reflecting mirror, and (2) requires many antenna elements. In either case, the system becomes heavy and large, which leads to an increase in manufacturing cost, and also there is a problem of a limited installation environment of the system.

The present invention has been made in view of the above circumstances, and an object thereof is to provide a phased array antenna device capable of achieving high spatial resolution even with a small number of antenna elements.

Solution to Problem

In order to solve the above problem, a phased array antenna device according to an aspect of the present invention includes multiple real antenna elements, a signal processing unit, a data processing unit, and an adding unit.

The signal processing unit is provided for each of the real antenna elements and converts an analog signal received by the real antenna element into a digital signal (digital data). The data processing unit is provided for each of the real antenna elements and, for each of the real antenna element and a virtual antenna element assumed to be located within a predetermined range of the real antenna element, subjects the digital data output from the signal processing unit to delay processing based on the positions and orientation directions of the real antenna element and the virtual antenna element. The adding unit performs addition processing of the digital data from the multiple real antenna elements after the delay processing and the digital data from the multiple virtual antenna elements after the delay processing.

Advantageous Effects of Invention

According to at least one aspect of the present invention, it is possible to provide a phased array antenna device capable of achieving high spatial resolution even with a small number of antenna elements.

Problems, configurations, and effects other than those described above will be clarified by the following description of embodiments.

Brief Description of Drawings

Fig. 1 is a diagram illustrating a technical idea of the present invention.

Fig. 2 is a diagram illustrating an example of a phased array antenna device having an A/D conversion function.

Fig. 3 is a diagram illustrating the path difference between and the delay time of signals arriving from orientation directions of two antenna elements.

**Fig.** 4 is a diagram illustrating a configuration example of a phased array antenna device according to a first embodiment of the present invention.

Fig. 5 is a block diagram illustrating a hardware configuration example of a controller included in the phased array antenna device according to the first embodiment of the present invention.

Fig. 6 is a diagram illustrating a configuration example of a phased array antenna device according to a second embodiment of the present invention.

Fig. 7 is a diagram illustrating a configuration example of a phased array antenna device according to a third embodiment of the present invention.

Fig. 8A is a diagram illustrating an example of an array antenna including multiple real antenna elements.

Fig. 8B is a diagram illustrating an example of a beam pattern by the array antenna of Fig. 8A.

Fig. 9A is a diagram illustrating an example of an array antenna in which multiple virtual antenna elements are introduced around one real antenna element.

Fig. 9B is a diagram illustrating an example of a beam pattern by the array antenna of Fig. 9A.

Fig. 10A is a diagram illustrating an example of an array antenna in which multiple virtual antenna elements are introduced around each of multiple real antenna elements.

Fig. 10B is a diagram illustrating an example of a beam pattern by the array antenna of Fig. 10A.

Fig. 11A is a diagram illustrating an example of an array antenna including multiple real antenna elements and a result of simulation of a beam pattern by the array antenna.

Fig. 11B is a diagram illustrating an example of an array antenna in which multiple virtual antenna elements are introduced around each of multiple real antenna elements and a result of simulation of a beam pattern by the array antenna.

Fig. 12A is a diagram illustrating an example of an array antenna including multiple real antenna elements and a result of actual measurement of a power count value by the array antenna.

Fig. 12B is a diagram illustrating an example of an array antenna in which multiple virtual antenna elements are introduced around each of multiple real antenna elements and a result of actual measurement of a power count value by the array antenna.

Description of Embodiments

Hereinafter, examples of modes for carrying out the present invention (hereinafter referred to as "embodiments") will be described with reference to the accompanying drawings. In the present specification and the accompanying drawings, the same components or components having substantially the same function are denoted by the same reference numerals, and redundant description is omitted. In addition, in a case where multiple components having the same or similar functions exist, a description may be given by adding different subscripts to the same reference numeral. Note that, in a case where these multiple components do not need to be distinguished from each other, the subscripts may be omitted.

<First Embodiment>

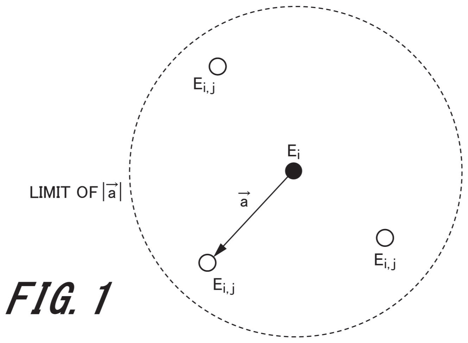

A phased array antenna device according to a first embodiment of the present invention will be described with reference to Figs. 1 to 5.

[Technical Idea of Present Invention]

First, a technical idea of the present invention will be described with reference to Fig. 1.

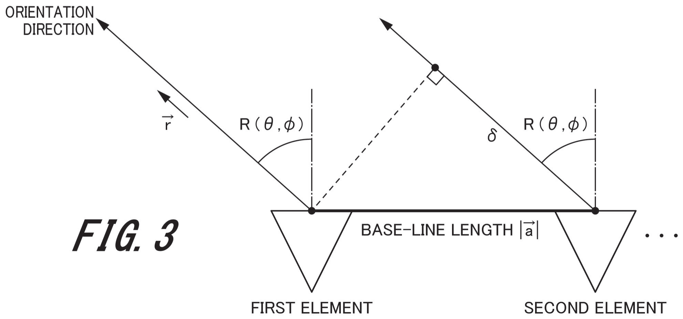

As illustrated in Fig. 1, when a virtual antenna element $E_{i,j}$ that does not actually exist is defined with respect to an antenna element $E_i$ that actually exists and when a base line vector a and a unit vector r in a direction (orientation direction) in which sharp sensitivity is intended to be directed are set (see Fig. 3), a path difference $\delta$ between the antenna element $E_i$ and the antenna element $E_{i,j}$ is expressed by the following equation (1). Hereinafter, an antenna element that actually exists is also referred to as a "real element", and a virtual antenna element that does not actually exist is also referred to as a "virtual element".

[Math. 1]

$$\delta \equiv |-\vec{r} \cdot \vec{a}| \quad \cdots\cdot(1)$$

where the light speed c = 3 × 10⁸ [m/s]

In the present invention, a signal obtained by delaying a signal, received by the real element $E_i$, by $\delta$/c is regarded as being received by the virtual element $E_{i,j}$. In order to accurately delay and synthesize the reception signal, a digital signal obtained by analog-digital conversion (A/D conversion) of the reception signal is to be processed. Here, the limit of the size of the base line vector a can be expressed by the following equation (2).

[Math. 2]

$$\text{Limit of } |\vec{a}| = \text{Limit of delay time } \delta\,/\,c \quad \cdots\cdot(2)$$

If the sampling rate (SPS: Sample Per Second) of an A/D converter can be made higher, that is, a sampling interval T can be made shorter, the limit of delay time $\delta$/c (a circle indicated by a broken line in Fig. 1) can be obtained with high accuracy. For example, in the phased array antenna device according to the present embodiment, the sampling speed and the sampling interval of A/D conversion are the following values.

- Sampling rate of A/D conversion:

$$F = 27.648 \times 10^9 [SPS] (27.648[GSPS])$$

- Sampling interval of A/D conversion:

$$T = 1/F = 1/(27.648 \times 10^9)$$

[Phased Array Antenna Device Having A/D Conversion Function]

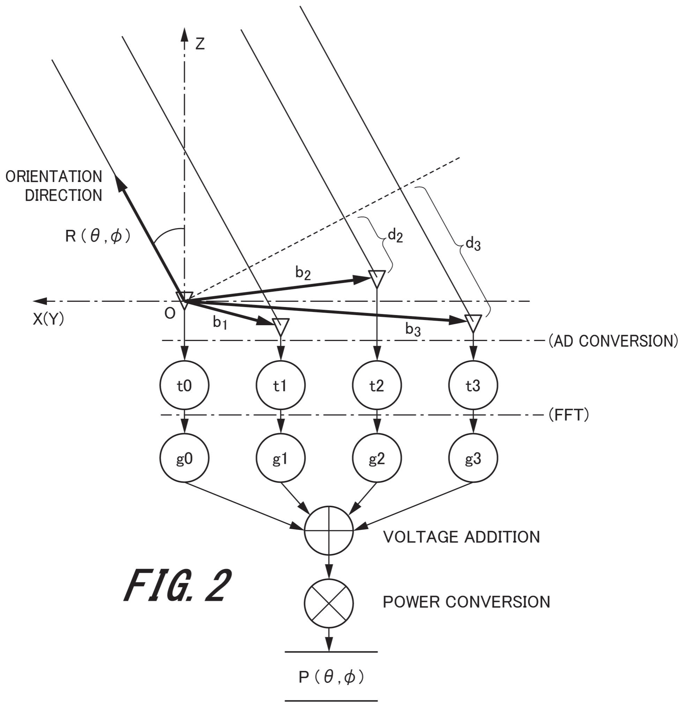

Next, a phased array antenna device having an A/D conversion function will be described with reference to Fig. 2.

Fig. 2 is a diagram illustrating an example of a phased array antenna device having an A/D conversion function.

As illustrated in Fig. 2, an antenna element (∇ sign) group constituting an array antenna is arranged with reference to an antenna element at an origin O. Here, four antenna elements are exemplified, but the number of antenna elements is not limited to this example.

In the example of Fig. 2, distances from this reference antenna element to the other antenna elements are distances $b_1$ to $b_3$, respectively. It can also be said that each of the distances $b_1$ to $b_3$ represents a positional relationship between the reference antenna element and the other antenna elements. In addition, in an orientation direction R(θ, φ), the path difference between the reference antenna element and an antenna element having the positional relationship of a distance $b_2$ is $d_2$, and the path difference between the reference antenna element and an antenna element having the positional relationship of a distance $b_3$ is $d_3$. θ is an azimuth angle, and φ is an elevation angle.

In the phased array antenna device, after A/D conversion of a signal received by each of the antenna elements, delay additions t0 to t3 based on a path difference $d_n$ according to the orientation direction R(θ, φ) are performed on digital data (hereinafter, reception data) of each of the reception signals. Fast Fourier Transform (FFT) is applied as frequency analysis processing to the reception data to which the delay additions (orientation control) are performed (g0 to g3).

Thereafter, the phased array antenna device performs voltage addition using output data (spectrum component data) obtained by performing FFT on each piece of the reception data. Here, although not illustrated, for two pieces of the FFT output data (for example, g0, g1), one of the pieces of data is converted into a conjugate complex number for each same complex frequency component, and then multiplication processing is performed.

Then, the phased array antenna device performs addition processing (correlation processing) of each piece of output data (cross-spectrum component data) obtained by the multiplication processing. This corresponds to addition (correlation processing) of the reception signal voltages of the antennas. Note that, such a method of voltage addition processing in the phased array antenna device is well known as described in Patent Literature **1.**

The phased array antenna device performs power conversion (integration processing) on each piece of output data (voltage spectrum component data) obtained by the addition processing. Here, autocorrelation processing of the voltage spectrum component data is performed. The "autocorrelation" is processing of obtaining a correlation between a certain waveform (data) and the same waveform (data) corresponding thereto, and is processing of multiplying a value of the certain waveform and a value of the same waveform (if the value is a complex number, a conjugate complex number thereof) at all times.

Once the antenna element receives power (energy), a voltage corresponding to the power is applied to the antenna element. Thus, a voltage is also applied to a reception circuit arranged at the subsequent stage of the antenna element, a current corresponding thereto flows, and current $\times$ voltage = (voltage$^2$/resistance) is calculated to obtain power.

As described above, the Fourier transform is applied to a time-series signal obtained by digitizing the voltage flowing through the reception circuit. As a result of the Fourier transform, a complex Fourier coefficient corresponding to each frequency component of the voltage is obtained. At this time, tan$^{-1}$ (imaginary part/real part) of the complex Fourier coefficient corresponding to each frequency component of the voltage represents a phase at the moment when the Fourier transform is performed. Note that, in the phase at the moment when the Fourier transform is performed, the power of each frequency component of the voltage is unchanged. This corresponds to the fact that, among the characteristics (phase, norm) of the complex number, norm = (real part$^2$+ imaginary part$^2$) = (real part + imaginary part) $\times$ (real part - imaginary part) is unchanged regardless of the phase.

As described above, to obtain the autocorrelation of the complex Fourier coefficient **(=** complex voltage spectrum component data) for all frequency components of the voltage of the reception signal is to obtain power spectrum component data (all frequency components of power). In addition, the power spectrum component data is obtained by obtaining the norm of the complex voltage spectrum component data, that is, "(real part + imaginary part) $\times$ (real part - imaginary part)" of the complex voltage spectrum component data. Here, the power spectrum component data is also referred to as an antenna reception power spectrum. Such a method of power conversion processing in the phased array antenna device is well known as described in Patent Literature 1.

After the power conversion, the phased array antenna device temporal-integrates the antenna reception power spectrum, performs brightness temperature calibration processing, and obtains a brightness temperature spectrum for each orientation direction R($\theta$, $\varphi$). In general, a thermal temperature (T) is different from a brightness temperature (T$_B$).

The temporal integration is processing of sequentially adding power spectra obtained by one Fourier transform. As a result, a drastic change in power due to the time change is weakened, and only a loose change in power due to the time change remains. For example, it takes about 3.6 ns to obtain 1024 points of data by A/D converting the reception signal by 27.648 GSPS. Then, after the data is subjected to the Fourier transform, it takes several ns (here, 6.4 ns) to calculate the autocorrelation to obtain power spectrum component data and store the data in a register (memory). That is, in a case where the time required for one Fourier transform is 10 ns and the integration time is 1 second, the power spectra are added 10 million times.

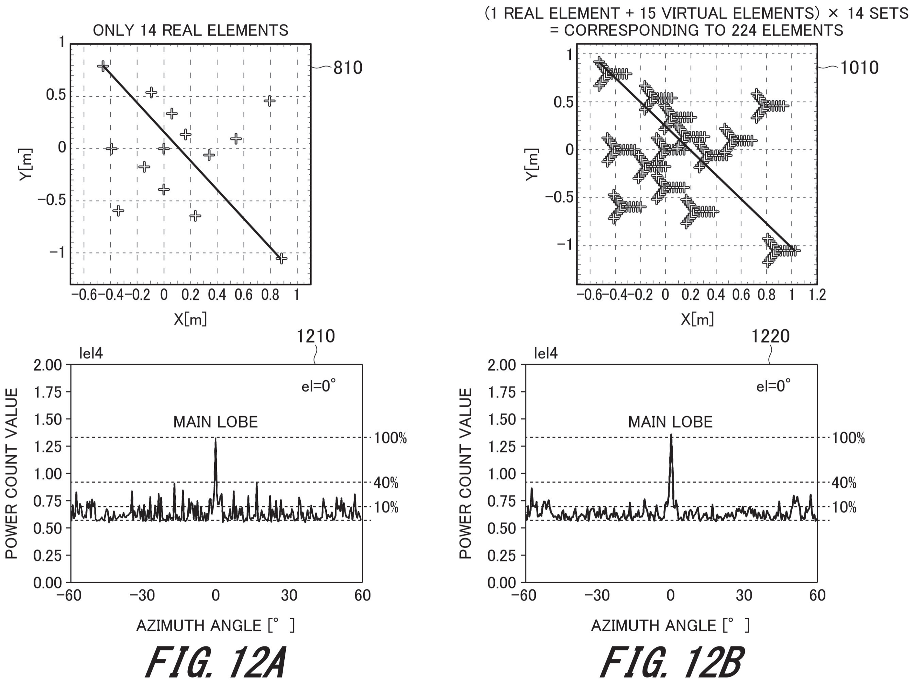

In the phased array antenna device, in practice, a voltage received by the antenna element is amplified by an amplifier (such as a low noise amplifier (LNA)) several times before A/D conversion, so that an obtained power spectrum includes characteristics of the amplifier. This is called a "power count value spectrum" and is different from the "power spectrum" received by the antenna element. The power count value spectrum corresponds to a power count value of Figs. 12A and 12B to be described later.

In order to obtain the power spectrum received by the antenna element, a procedure for converting the power count value spectrum is required, and this is referred to as calibration processing. Power (P) and brightness temperature (T$_B$) received by the antenna element can be converted by T$_B$ = P/kB(k: Boltzmann constant, B: bandwidth). For example, when the reception signal is A/D converted by 27.648 GSPS to obtain 1024 points of data and subjected to Fourier transform, the interval between adjacent spectra is 27.648 $\times$ 10$^9$/1024 = 27 $\times$ 10$^6$ Hz = 27 MHz. Therefore, when the brightness temperature (T$_B$) received by the antenna element at a certain frequency is 300 K, the power (P) received by the antenna element is kB$\cdot$T$_B$ = 1.1$\cdot$10$^{-11}$ W. This is different from the power count value including the characteristics of the amplifier.

As described above, since the power received by the antenna element is an extremely small value and hard to handle, the brightness temperature is used instead. In order to obtain the power (= brightness temperature spectrum) received from the power count value by the antenna element, two known relationships of "brightness temperature-power count value" are held, and by interpolating and/or extrapolating these relationships, an arbitrary power count value is converted into the corresponding brightness temperature. In an absorber whose thermal temperature is known, the brightness temperature is also known. For example, the brightness temperature of the absorber (the terminator in the reception circuit) having a thermal temperature of 100 K is 100 K, and the brightness temperature is 400 K when the thermal temperature is 400 K.

Unlike general wireless communication, microwave radiometers, and the like, the phased array antenna device having such an A/D conversion function can detect a weak electromagnetic wave in an extremely wide frequency range for each frequency component. In addition, the phased array antenna device having the A/D conversion function does not use any mechanical movable component, and thus has a longer life than an antenna device using a mechanical movable component. Further, since the phased array antenna device having the A/D conversion function does not need to be rotationally driven, it is possible to easily increase the scale of the device as compared with the antenna device using the mechanical movable component. This is advantageous in terms of spatial resolution of the antenna device.

Note that, as described above, the phased array antenna device having the A/D conversion function is also disclosed in Patent Literature 1.

[Path Difference between Signals Arriving from Orientation Directions of Antenna Elements]

Next, the path difference between and the delay time of signals arriving from orientation directions of two antenna elements will be described with reference to Fig. 3. For simplicity, two antenna elements will be described.

Fig. 3 is a diagram illustrating the path difference between and the delay time of signals arriving from orientation directions of two antenna elements. In the drawing, the first element corresponds to a real element, and the second element corresponds to a virtual element. Assuming that $\delta$ is the path difference between signals from the orientation directions of the two antenna elements, and that $t = \delta/c$ is time (delay time) required for the reception signal to advance by the path difference $\delta$, the delay time t can be expressed by the following equation (3) by a sampling interval $T = 1/F = 1/(27.648 \times 10^9 \text{ [SPS]})$. n is the number of samples of a sampling clock, and nT is a sample delay (also referred to as a bit delay).

[Math. 3]

$$t = nT + \tau \quad (n : \text{Integer}, 0 \leq \tau < T) \quad \cdots (3)$$

The signal received by the second element is delayed by the delay time t and synthesized with the signal received by the first element. The signal of a frequency f advances in phase by $2\pi f\tau$ at time $\tau$. Accordingly, (each frequency component of) the signal of the second element delayed by the delay time t is obtained by decomposing the signal of the second element, delayed by n samples, into spectra by FFT and multiplying each frequency component thereof by $e^{j2\pi f\tau}$ (phase slope). The time $\tau$ is shorter than the sampling interval T. With the time $\tau$, the time of a fraction of the delay time t that cannot be adjusted with the sample delay nT can be adjusted.

[Configuration of Phased Array Antenna Device]

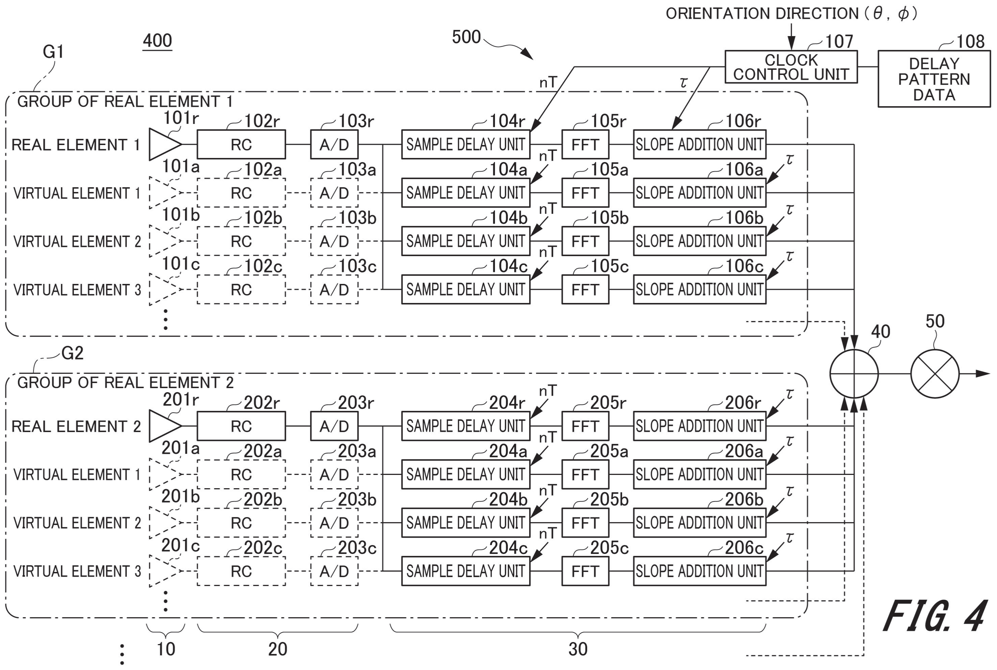

Next, the configuration of the phased array antenna device according to the first embodiment of the present invention in which the technical idea illustrated in Figs. 1 to 3 is mounted will be described with reference to Fig. 4.

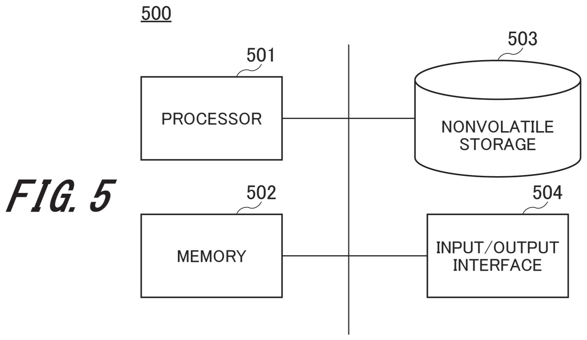

Fig. 4 is a diagram illustrating a configuration example of the phased array antenna device according to the first embodiment of the present invention. A phased array antenna device 400 illustrated in Fig. 4 includes an antenna element group 10, a signal processing unit 20, a data processing unit 30, a clock control unit 107, delay pattern data 108, a voltage adding unit 40, and a power conversion unit 50. Note that, the data processing unit 30, the clock control unit 107, and the delay pattern data 108 are included in a controller 500. A hardware configuration of the controller 500 will be described later with reference to Fig. 5.

The antenna element group 10 includes multiple real antenna elements (hereinafter, real elements) and multiple virtual antenna elements (hereinafter, virtual elements) arranged around the real elements, and is divided into groups for each real element. If the number of real elements is 14, 14 groups are formed. In Fig. 4, a group G1 of a real element 1 includes a real element 101r (real element 1) and virtual elements 101a to 101c (virtual elements 1 to 3 of the real element 1).

Meanwhile, a group G2 of a real element 2 includes a real element 201r (real element 2) and virtual elements 201a to 201c (virtual elements 1 to 3 of the real element 2). In Fig. 4, virtual circuits and processing units including the virtual elements are indicated by broken lines. Hereinafter, since the group G1 of the real elements 1 and the group G2 of the real elements 2 have the same configuration of the signal processing unit 20 and the data processing unit 30, the group G1 of the real elements 1 will be described.

The signal processing unit 20 includes a reception circuit (in the drawing, RC)102r and an A/D converter 103r, and converts a signal, received through the real element 101r, into digital data. The signal processing unit 20 is provided for each real element. In the group G1 of the real elements 1, the signal processing unit 20 includes a reception circuit 102r that receives a radio wave arriving at the real element 101r and an A/D converter 103r. The signal processing unit 20 also includes virtual reception circuits 102a to 102c that receive radio waves arriving at the virtual elements 101a to 101c and virtual A/D converters 103a to 103c.

The virtual elements 101a to 101c, the virtual reception circuits 102a to 102c, and the virtual A/D converters 103a to 103c do not actually exist. By software processing in the data processing unit 30 to be described later, processing as if the virtual elements 101a to 101c, the virtual reception circuits 102a to 102c, and the virtual A/D converters 103a to 103c existed is performed.

The reception circuit 102r(in the drawing, RC) includes, for example, a preamplifier such as an LNA and a band-pass filter (BPF). The A/D converter 103r(in the drawing, A/D) digitizes an analog input signal and outputs the digitized signal to the data processing unit 30 at the subsequent stage. Note that, in the signal processing unit 20, a register or a memory may be provided at the subsequent stage of the A/D converter 103.

The data processing unit 30 applies frequency analysis processing and delay processing to the digital data of the reception signal of each antenna element output from the signal processing unit 20, and outputs the digital data to the voltage adding unit 40. The data processing unit 30 is provided for each real element. In the group G1 of the real elements 1, the data processing unit 30 includes sample delay units 104r, 104a to 104c to which data of a signal received by the real element 101r is input, FFTs 105r, 105a to 105c, and slope addition units 106r, 106a to 106c. The processing of the data processing unit 30 is controlled by the clock control unit 107. The data processing unit 30 performs "sample delay" and "slope addition" on data corresponding to the signal of the virtual element.

The data processing unit 30 performs delay processing for each real element and each virtual element by applying delay time corresponding to the path difference (Fig. 2) between the signal arriving at the reference real element and the signals arriving at the real element and the virtual element.

The clock control unit 107 gives a temporal shift (delay) to the supply timing of the sampling clock to the data processing unit 30 according to a target direction (orientation direction) in which the phased array antenna device 400 receives a radio wave.

When scanning a target area set in advance or specified manually, the clock control unit 107 reads delay time t(n, $\tau$) from the delay pattern data 108 for each orientation direction ($\theta$, $\varphi$). Then, the clock control unit 107 notifies the sample delay units 104r, 104a to 104c of the number of samples n to be delayed and the slope addition units 106r, 106a to 106c of the time $\tau$. In the present embodiment, the time $\tau$ is shorter than the sampling interval T. Likewise, the clock control unit 107 also performs clock control on the group G2 of the real elements 2 and other groups.

The delay pattern data 108 is map information (table) defining a correspondence relationship between the orientation direction (azimuth angle $\theta$, elevation angle $\varphi$) and the delay time t(n, $\tau$) for the real element and each virtual element of the antenna element group 10. If the distances from the reference real element to other real elements and surrounding virtual elements are different, the delay time t of the reception signal of the other real elements and surrounding virtual elements with respect to the reference real element changes, and if the distances from the reference real element to the other real elements and surrounding virtual elements are the same, the delay time t does not change.

Based on the positions and orientation directions ($\theta$, $\varphi$) of the real element 101r and the virtual elements 101a to 101c, the sample delay units 104r and 104a to 104c perform sample delay processing on data of the real element, output from the signal processing unit 20, for each of the virtual elements 101a to 101c assumed to be arranged within a predetermined range of the real element 101r and the real element 101r. In the sample delay unit 104, the signal of each virtual element is deemed to be the same as the signal received by the real element. In the present embodiment, the sample delay unit 104 performs delay processing on digital data before the Fast Fourier transform of the signal, received by the real element 101r, based on the sample delay nT notified by the clock control unit 107.

The predetermined range of the real element above is a range in which an output of a grating lobe is equal to or less than a predetermined threshold (such as 10%) with respect to an output of a main lobe regarding a beam pattern obtained by addition processing of the respective data obtained by the real element and the virtual elements arranged around the real element. In general, when the output of the grating lobe with respect to the main lobe is 10% or less, a certain quality can be expected for the beam pattern. By virtually arranging each virtual element around the real element under such conditions, the signal of each virtual element can be deemed as the same as the signal received by the real element. Thus, the signal processing as if the virtual elements actually existed can be performed using the signal received by the real element.

The FFTs 105r, 105a to 105c perform frequency analysis by applying the fast Fourier transform to the delay-processed data output from each of the sample delay units 104r, 104a to 104c. The FFT may be realized by hardware, for example, by designing with an integrated circuit. For example, a field programmable gate array (FPGA), an application specific integrated circuit (ASIC), or the like may be used as the hardware.

The slope addition units 106r, 106a to 106c perform slope addition processing of adding a phase slope to the spectrum component data output from the FFTs 105r, 105a to 105c. The slope addition units 106r, 106a to 106c add the

phase slope $e^{j2\pi f\tau}$ to each spectrum component data after the fast Fourier transform based on the time $\tau$ notified by the clock control unit 107.

The group G2 of the real element 2 also includes the antenna element group 10, the signal processing unit 20, and the data processing unit 30. In the group G2 of the real element 2, the antenna element group 10 includes, for example, the real element 201r (real element 2) arranged adjacent to the real element 101r and the virtual elements 201a to 201c (virtual elements 1 to 3 of the real element 2).

In addition, in the group G2 of the real element 2, the signal processing unit 20 includes a reception circuit (in the drawing, RC) 202r and an A/D converter 203r. Further, in the group G2 of the real element 2, the data processing unit 30 includes sample delay units 204r, 204a to 204c to which data of a signal received by the real element 201r is input, FFTs 205r, 205a to 205c, and slope addition units 206r, 206c to 206c.

In the example of Fig. 4, the data processing unit 30, the clock control unit 107, and the delay pattern data 108 are included in the controller 500. Meanwhile, the data processing unit 30, the clock control unit 107, and the delay pattern data 108 may be configured separately, or the data processing unit 30 may be configured to include the clock control unit 107 and the delay pattern data 108. That is, the clock control function of the clock control unit 107 and the data processing function of the data processing unit 30 are implemented in the controller 500.

[Hardware Configuration of Controller]

Here, a hardware configuration of the controller 500 included in the phased array antenna device 400 will be described with reference to Fig. **5.**

Fig. 5 is a block diagram illustrating a hardware configuration example of the controller 500. The controller 500 can be configured using an FPGA as an example. As illustrated in Fig. **5,** the controller 500 includes, for example, a processor 501, a memory 502, a nonvolatile storage 503, and an input/output interface 504. Each block may transmit and receive data to and from one another via a system bus. The configuration of the controller 500 is an example of hardware used as a computer.

The processor 501 reads a program code of software for realizing each function according to the present embodiment from the nonvolatile storage 503, loads the program code into the memory 502, and executes the program code. Variables, parameters, and the like generated during arithmetic processing of the processor 501 are temporarily written to the memory 502, and these variables, parameters, and the like are read by the processor 501 as appropriate. The processor 501 executes the program code read into the memory 502 to realize the clock control function and the data processing function of the controller 500.

The nonvolatile storage 503 is an example of a non-transitory recording medium, and can store data used by a program, data obtained by executing the program, and the like. The delay pattern data 108 is configured using the nonvolatile storage 503. As the nonvolatile storage 503, a hard disk drive (HDD), a solid state drive (SSD), a disk medium using light or magnetism, a semiconductor memory card, or the like is used.

As the input/output interface 504, for example, a communication device such as a network interface card (NIC) is used. The input/output interface 504 is configured to be able to transmit and receive various kinds of data to and from the signal processing unit 20 and an external device via a communication network such as the Internet.

The hardware configuration of the controller 500 included in the phased array antenna device 400 has been described above.

Returning to Fig. 4 again, the description will be continued. The data processing unit 30 illustrated in Fig. 4 causes the sample delay unit 104 to delay the data of the signal received by a certain real element by n samples with the sampling interval set to T in consideration of the delay time with respect to the data of the signal received by the reference real element, and then executes the Fourier transform by the FFT 105. Then, the data processing unit 30 uses the spectrum component data, obtained by performing the Fourier transform on the data of the signal of the real element by the FFT 105, as the spectrum component data of the virtual element.

Then, the data processing unit 30 adds the output data, obtained by performing the Fourier transform by the FFT 105, by the voltage adding unit 40 to obtain a complex voltage spectrum for each frequency component. The voltage adding unit 40 adds the data from the multiple real elements after the delay processing and the data from the multiple virtual elements after the delay processing of each group output from the data processing unit 30.

Further, the data processing unit 30 obtains a power spectrum by adding the respective complex voltage spectra by the power conversion unit 50 and taking autocorrelation. This power spectrum represents the sum of power received from all the orientation directions in which the path difference between the reference real element and other real elements becomes the sample delay nT.

In the present embodiment, for a virtual element group belonging to a group of a certain real element, the same number of samples n as that of the real element is used at the time of sample delay processing. That is, regarding the delay time t defined by $t = nT + \tau$, the same sample delay nT is applied to the real element and to the virtual element group around the real element, and the appropriate delay time t is given to data of each element according to the time $\tau$ within a range not exceeding the limit of the magnitude of the vector a (Fig. 1).

By doing so, calculation is performed in which multiple virtual elements are arranged at positions, around one real element, where the path differences are different within a range not exceeding the limit of the delay time. As a result, a phased array antenna device with high spatial resolution is realized.

According to the present embodiment having such a configuration, it is possible to reduce an area where antenna elements constituting a phased array antenna device can be installed. Therefore, it is possible to install the phased array antenna device of the present embodiment even in a small satellite whose mass and supply power upper limit are restricted.

For example, the phased array antenna device 400 can achieve a sharp beam width, similarly to a conventional phased array antenna device that requires many antenna elements. Therefore, when the phased array antenna device of the present embodiment is used for satellite observation, high spatial resolution observation is realized.

As has been described above, a phased array antenna device according to the first embodiment includes: multiple real antenna elements; a signal processing unit (signal processing unit 20) provided for each of the real antenna elements to convert an analog signal received by the real antenna element into a digital signal and output data of the resultant signal; a data processing unit (data processing unit 30) which is provided for each of the real antenna elements and which, for each of the real antenna element and a virtual antenna element assumed to be located within a predetermined range of the real antenna element, subjects data output from the signal processing unit to delay processing based on the positions and orientation directions of the real antenna element and the virtual antenna element; and an adding unit (voltage adding unit 40) that adds data from the multiple real antenna elements after the delay processing and data from the multiple virtual antenna elements after the delay processing.

More specifically, the data processing unit (data processing unit 30) according to the present embodiment includes: a first delay unit (sample delay units 104r, 104a to 104c, 204r, 204a to 204c) that is provided for each of the real antenna element and the virtual antenna element and performs sample delay processing using a sampling interval T and the number of samples n on the data of the signal received by the real antenna element and output from the signal processing unit; a fast Fourier transform unit (FFTs 105r, 105a to 105c, 205r, 205a to 205c) that is provided for each of the real antenna element and the virtual antenna element and performs fast Fourier transform on data after the sample delay processing output from the first delay unit; and multiple second delay units (slope addition units 106r, 106a to 106c, 206r, 206a to 206c) that are respectively provided for the real antenna element and the virtual antenna element, and perform delay processing by adding a phase slope using time $\tau$ on data output from the fast Fourier transform unit and outputs the data to the adding unit.

According to the present embodiment described above, it is possible to realize a phased array antenna device virtually including a large number of antenna elements even with a small number of real antenna elements. This means that high spatial resolution and a directivity control function comparable to those of a phased array antenna device actually configured by many real antenna elements can be realized with a small number of antenna elements.

In addition, according to the present embodiment, since the number of antenna elements is reduced, it is possible to reduce the manufacturing cost required for realizing the same performance. Further, since the number of antenna elements is reduced, the phased array antenna device can be installed even in a place where installation of a phased array antenna device is conventionally impossible due to the upper limit of the installation area, the mass, and the supply power, so that the application range of the phased array antenna device can be expanded.

There is a wide variety of uses of microwave transmission/reception systems using phased array antenna devices such as interferometers and synthetic-aperture radars, regardless of satellite/ground. Therefore, by applying the phased array antenna device of the present invention to a microwave transmission/reception system, a range where benefit of reduction in size and weight can be received is expected to expand.

<Second Embodiment>

A second embodiment is an example in which the configuration of the data processing unit 30 of the phased array antenna device 400 (Fig. 4) according to the first embodiment is simplified.

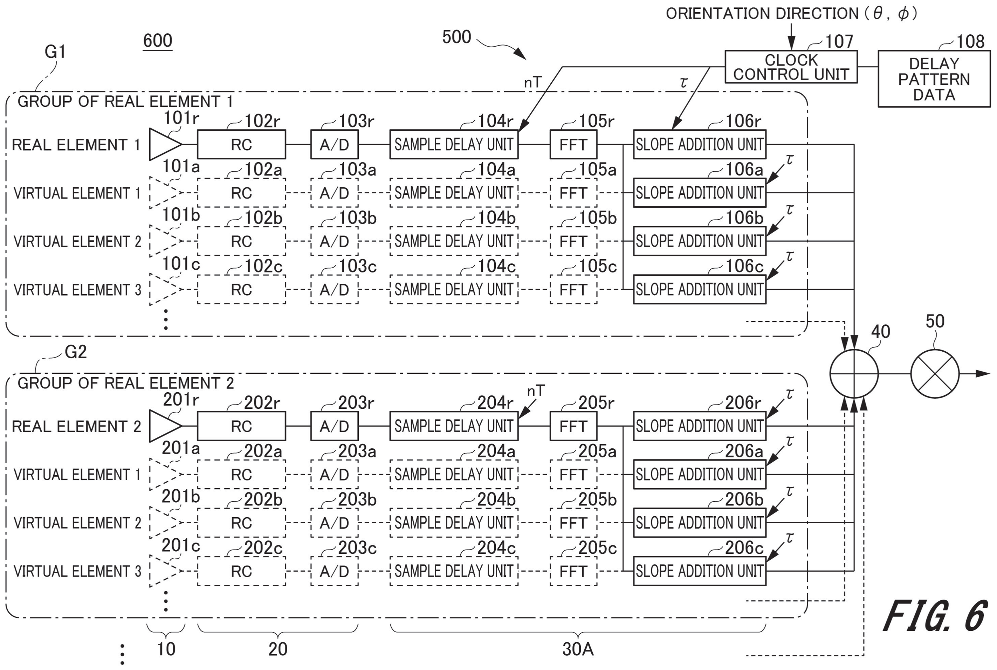

Fig. 6 is a diagram illustrating a configuration example of a phased array antenna device according to the second embodiment of the present invention. In a phased array antenna device 600 illustrated in Fig. 6, the controller 500 includes a data processing unit 30A instead of the data processing unit 30 (Fig. 4) according to the first embodiment.

The data processing unit 30A is configured to perform only "slope addition" on data corresponding to the signal of the virtual element. In the group G1 of the real element 1, the sample delay units 104a to 104c and the FFTs 105a to 105c do not exist in the data processing unit 30A for the data corresponding to the signals of the virtual elements 101a to 101c.

Similarly, in the group G2 of the real element 2, the sample delay units 204a to 204c and the FFTs 205a to 205c do not exist in the data processing unit 30A for the data corresponding to the signals of the virtual elements 201a to 201c.

In the present embodiment, similarly to the first embodiment, for a virtual element group belonging to a group of a certain real element, the sample delay nT with the same number of samples n as the real element is taken into consideration during the sample delay processing. Here, the sample delay nT is reflected only on the data of the real element, and the data reflecting the sample delay nT is input to the slope addition unit of each of the real element and the virtual element group.

Then, each slope addition unit finally gives appropriate delay time t to the data of each element according to the time $\tau$ within a range not exceeding the limit (Fig. 1) of the magnitude of the vector a.

By doing so, with a simpler configuration than that of the first embodiment, calculation is performed in which multiple virtual elements are arranged at positions, around one real element, where the path differences are different within a range not exceeding the limit of the delay time. Also with this configuration, a phased array antenna device with high spatial resolution is realized.

In addition, there is a limit in the program capacity that can be written in the controller 500 (configured by an FPGA, for example) that processes the signals of the real element and the virtual element. However, in the present embodiment, since the sample delay unit and the FFT for the virtual element are unnecessary, it is possible to increase the number of virtual elements while reducing the program capacity. As a result, a phased array antenna device with higher spatial resolution is realized.

As described above, in the phased array antenna device according to the second embodiment, the data processing unit (data processing unit 30A) includes: a first delay unit (sample delay unit 104r, 204r) that is provided for each real antenna element and performs sample delay processing using a sampling interval T and the number of samples n on data of a signal received by the real antenna element and output from the signal processing unit; a fast Fourier transform unit (FFT 105r, 205r) that is provided for each real antenna element and performs fast Fourier transform on data after the sample delay processing output from the first delay unit; and multiple second delay units (slope addition units 106r, 106a to 106c, 206r, 206a to 206c) that are respectively provided for the real antenna element and virtual antenna elements, and perform delay processing by adding a phase slope using time $\tau$ on data output from the fast Fourier transform unit and output the data to the adding unit.

<Third Embodiment>

A third embodiment is an example in which the configuration of the data processing unit 30A of the phased array antenna device 600 (see Fig. 6) according to the second embodiment is further simplified.

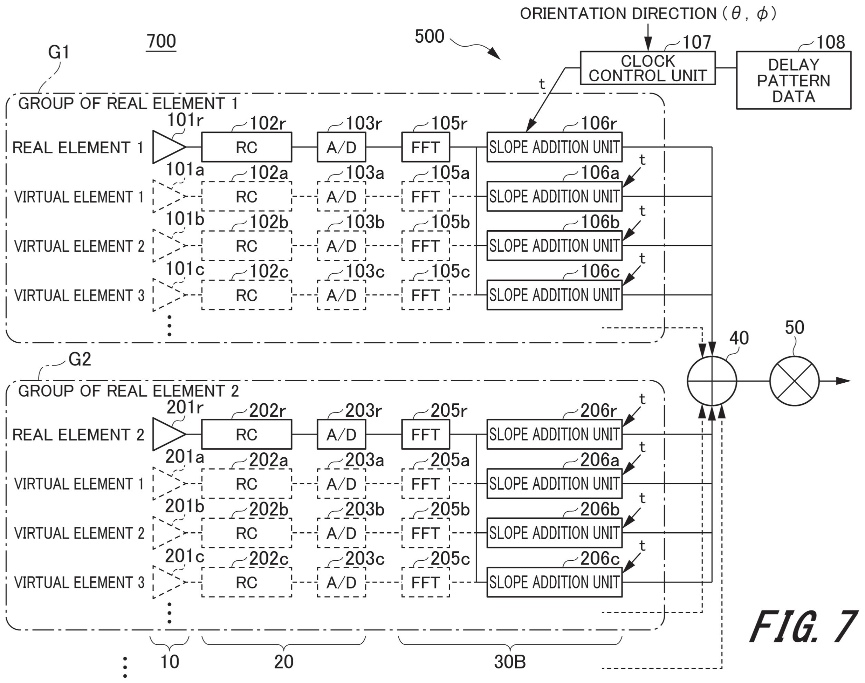

Fig. 7 is a diagram illustrating a configuration example of a phased array antenna device according to the third embodiment of the present invention. In a phased array antenna device 700 illustrated in Fig. 7, the controller 500 includes a data processing unit 30B instead of the data processing unit 30A (Fig. 6) according to the second embodiment.

The data processing unit 30B is configured to perform only "slope addition" on data corresponding to the signals of the real element and the virtual element. The data processing unit 30B can multiply $e^{j2\pi ft}$ based on the delay time t as the phase slope in the slope addition unit without sample delay in both the real element and the virtual element.

In the group G1 of the real element 1, the sample delay units 104r, 104a to 104c and the FFTs 105r, 105a to 105c do not exist in the data processing unit 30A for the data corresponding to the signals of the real element 101r and the virtual elements 101a to 101c. Similarly, in the group G2 of the real element 2, the sample delay units 204r, 204a to 204c and the FFTs 205r, 205a to 205c do not exist in the data processing unit 30A for the data corresponding to the signals of the real element 201r and the virtual elements 201a to 201c.

In the present embodiment, for a real element and a virtual element group belonging to a certain group, the sample delay nT with the same number of samples n as the real element is taken into consideration during the slope addition processing. That is, regarding the delay time t defined by $t = nT + \tau$, the same sample delay nT between the real element and the virtual element group around the real element is reflected to the slope addition to the data of the real element and the virtual element group. Each slope addition unit gives appropriate delay time t to the data of each element according to the time $\tau$ including the sample delay nT within a range not exceeding the limit (Fig. 1) of the magnitude of the vector a.

By doing so, with a simpler configuration than that of the second embodiment, calculation is performed in which multiple virtual elements are arranged at positions, around one real element, where the path differences are different within a range not exceeding the limit of the delay time. Also with this configuration, a phased array antenna device with high spatial resolution is realized.

As described above, in the phased array antenna device according to the third embodiment, the data processing unit (data processing unit 30B) includes: a fast Fourier transform unit (FFT 105r, 205r) that is provided for each real antenna element and performs fast Fourier transform on data of a signal received by the real antenna element and output from the signal processing unit; and multiple delay units (slope addition units 106r, 106a to 106c, 206r, 206a to 206c) that are respectively provided for the real antenna element and virtual antenna elements, and perform delay processing by adding a phase slope using delay time t on data output from the fast Fourier transform unit and output the data to the adding unit.

<Arrangement of Antenna Elements and Beam Pattern>

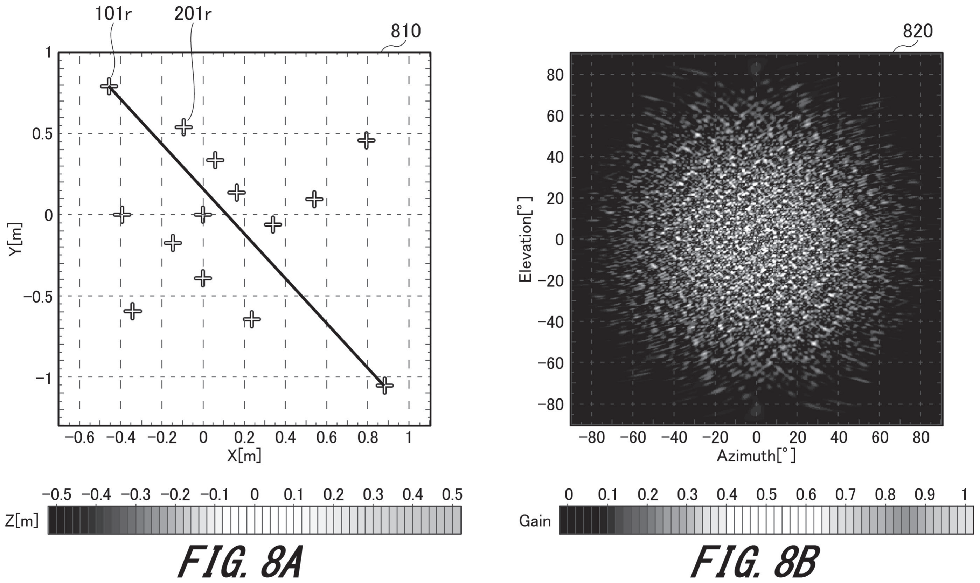

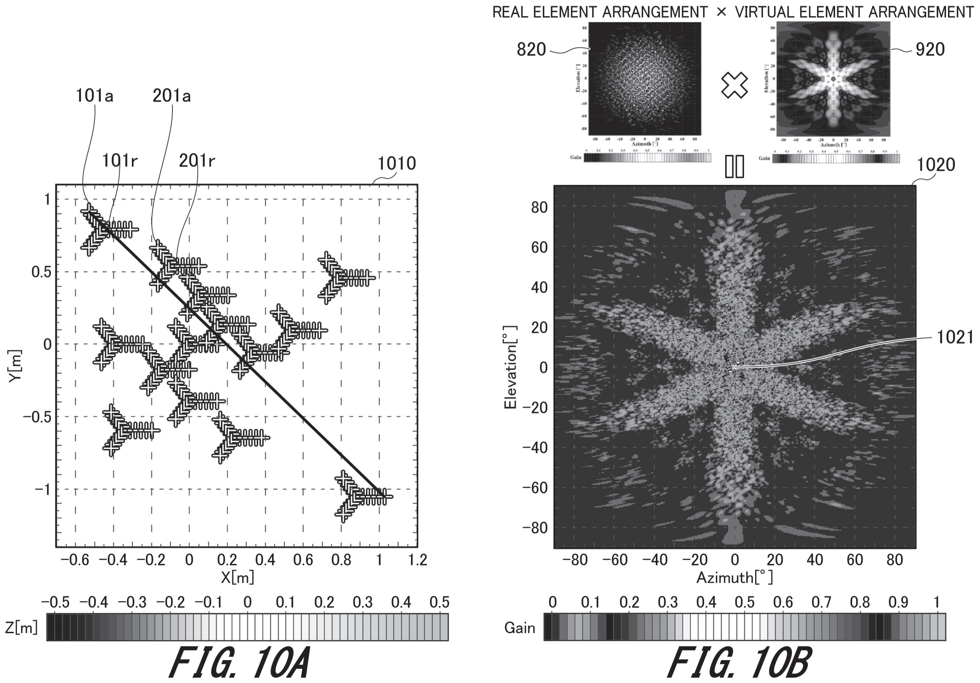

Here, the arrangement of antenna elements and the beam pattern (luminance temperature spectrum) will be described with reference to Figs. 8A, 8B to 10A, and 10B.

[Case of Only Real Antenna Element]

Figs. 8A and 8B are diagrams illustrating an example of an array antenna including multiple real antenna elements and a beam pattern thereof. Fig. 8A illustrates an example of an array antenna including 14 real antenna elements, and Fig. 8B illustrates an example of a beam pattern obtained by the array antenna. "Z [m]" described under antenna element arrangement 810 in Fig. 8A means an axis perpendicular to the X-Y plane, and represents the heights of the antenna elements. In the example of Fig. 8A, all the real antenna elements are installed at the same height (for example, Z = 0).

A beam pattern 820 in Fig. 8B is a simulation result obtained by giving a delay to each element and synthesizing the elements based on the path difference at the time when a signal of 10 GHz arrives at the array antenna from every orientation direction (azimuth angle $\theta$, elevation angle $\varphi$).

"Gain" illustrated on the lower side of Fig. 8B is an index related to the sensitivity of the antenna element after power conversion. In the example of Fig. 8B, with the sensitivity in the orientation direction $(\theta, \varphi) = (0,0)$ set to 0 dB, the ratio of the sensitivity in each orientation direction to 0 dB is represented by color. For example, a ratio of 0.1 is -10dB, and a ratio of 0.01 is -20dB. As illustrated in the beam pattern 820, an infinite number of sensitivities in unnecessary directions (grating lobes) are generated in the 14 elements.

[Case Where Virtual Antenna Element Is Introduced]

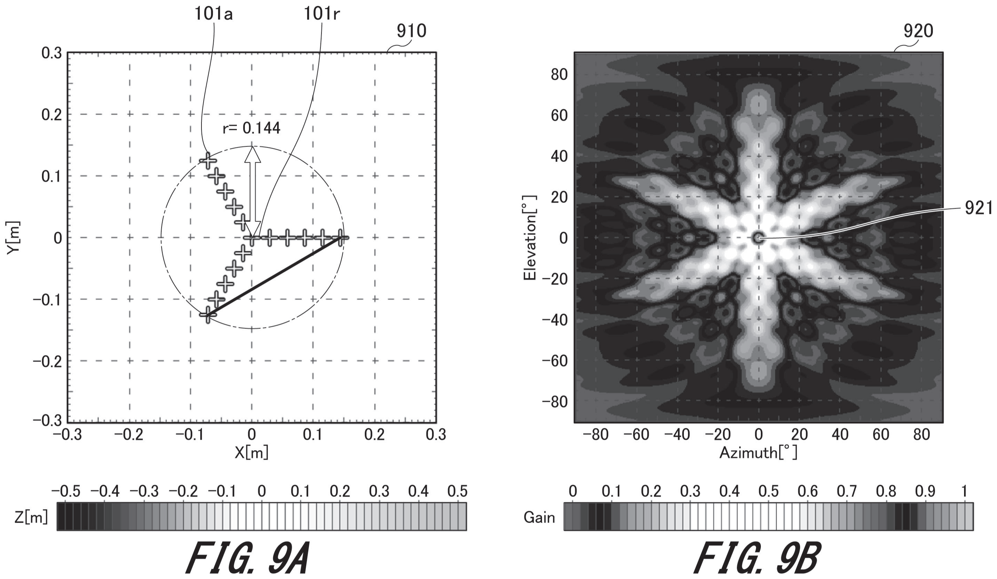

Figs. 9A and 9B are diagrams illustrating an example of an array antenna in which multiple virtual antenna elements are introduced around a real antenna element and a beam pattern thereof. Fig. 9A illustrates an example of an array antenna in which 15 virtual antenna elements are arranged around one real antenna element, and Fig. 9B illustrates an example of a simulation result of a beam pattern obtained by the array antenna.

As illustrated in antenna element arrangement 910 of Fig. 9A, a group of 15 virtual elements is developed for a real element with the position of the real element as the origin. The signals of the virtual element group and the real element have differences corresponding to 14 elements at maximum. In a beam pattern 920 of Fig. 9B, a sensitivity at an origin 921 of the orientation direction $(\theta, \varphi) = (0,0)$ is higher than that in the other orientation directions, but a large number of sensitivities in unnecessary directions (grating lobes) are also generated.

[Case Where Virtual Antenna Element Is Introduced for Multiple Real Antenna Elements]

Figs. 10A and 10B are diagrams illustrating an example of an array antenna in which multiple virtual antenna elements are introduced around each of multiple real antenna elements and a beam pattern thereof. Fig. 10A illustrates an example of an array antenna in which 15 virtual antenna elements are arranged around each of 14 real antenna elements, and Fig. 10B illustrates an example of a simulation result of a beam pattern obtained by the array antenna.

As illustrated in antenna element arrangement 1010 of Fig. 10A, a group of 15 virtual elements is developed for each real element with the position of the real element as the origin. That is, in the antenna element arrangement 1010, (1 real element + 15 virtual elements) $\times$ 14 sets = 224 elements are arranged.

As illustrated in a beam pattern 1020 of Fig. 10B, the sensitivity (Gain) is greatly increased at a position 1021 where the azimuth angle and the elevation angle are 0 degrees, and the sensitivity is lowered at other positions. Note that, the examples of Figs. 8B, 9B, and 10B are simulation results assuming the configuration of the phased array antenna device 400 (Fig. 4) according to the first embodiment.

<Simulation Result and Actual Measurement Result>

In order to verify the effects of the invention, the inventors have performed the signal processing and the data processing illustrated in Fig. 4 in a case where microwaves are received from multiple orientation directions by an array antenna including multiple real antenna elements and an array antenna in which multiple virtual antenna elements are introduced around each of the multiple real antenna elements.

[Result of Simulation]

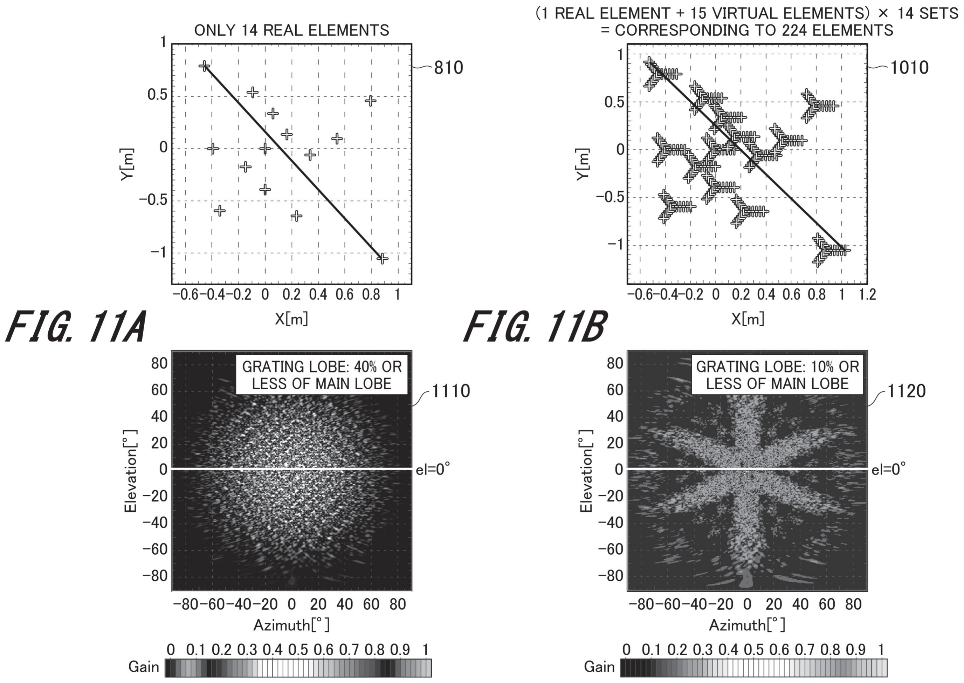

First, a result of simulation of a beam pattern for each array antenna will be described with reference to Figs. 11A and 11B.

Fig. 11A is a diagram illustrating an example of an array antenna including multiple real antenna elements and a result of simulation of a beam pattern by the array antenna.

Fig. 11B is a diagram illustrating an example of an array antenna in which multiple virtual antenna elements are introduced around each of multiple real antenna elements and a result of simulation of a beam pattern by the array antenna.

These results of simulation are obtained using the phased array antenna device 600 (Fig. 6) according to the second embodiment.

As illustrated in a beam pattern 1110 of Fig. 11A, in the case of only 14 real elements, the grating lobe is 40% or less of the main lobe. On the other hand, as illustrated in a beam pattern 1120 of Fig. 11B, when virtual elements (15 elements for each) are introduced for each of the 14 real elements, the grating lobe is 10% or less of the main lobe. From this result of simulation, an effect of suppressing the grating lobe in the array antenna is recognized by introducing the virtual element.

[Result of Actual Measurement]

Next, a result of actual measurement of a power count value for each array antenna will be described with reference to Figs. 12A and 12B.

Fig. 12A is a diagram illustrating an example of an array antenna including multiple real antenna elements and a result of actual measurement of a power count value by the array antenna.

Fig. 12B is a diagram illustrating an example of an array antenna in which multiple virtual antenna elements are introduced around each of multiple real antenna elements and a result of actual measurement of a power count value by the array antenna. "le14" in the figure means $10^{14}$.

In the antenna element arrangement 810 of Fig. 12A, an array antenna was actually manufactured using 14 real elements, and radio waves were received by the array antenna. Meanwhile, in the antenna element arrangement 1010 of Fig. 12B, 15 virtual elements were actually arranged around each of the 14 real elements. This result of actual measurement is obtained by actual measurement using the phased array antenna device 600 (Fig. 6) according to the second embodiment.

As illustrated in power count value data 1210 of Fig. 12A, in the case of only 14 real elements, the power count value of the grating lobe is 40% or less of the main lobe, but the power count value of the grating lobe frequently exceeds 10% of the main lobe. On the other hand, as indicated by power count value data 1220 in Fig. 12B, the power count value of the grating lobe decreases in values other than the main lobe, and the frequency of exceeding 10% of the main lobe also decreases. From this result of actual measurement, an effect of suppressing the grating lobe in the array antenna is recognized by introducing the virtual element.

Since the power count value is a value obtained by actual measurement, it is larger than the case of using Gain (luminance temperature spectrum) illustrated in Figs. 8B, 9B, 10B, and 11B, but the fact that the grating lobe is suppressed to the same extent as the simulation result could be confirmed.

Note that, the results illustrated in Figs. 11B and 12B are obtained using the configuration of the phased array antenna device 600 (Fig. 6) according to the second embodiment, but similar results can be obtained even in the case of using the phased array antenna devices 400,700 according to the first and third embodiments.

Although the embodiments of the present invention have been described above, the present invention is not limited to the above-described embodiments, and it goes without saying that various other application examples and modifications can be taken without departing from the gist of the present invention described in the claims. For example, the above-described embodiments describe the configuration of the phased array antenna device in detail and specifically in order to describe the present invention in an easy-to-understand manner, and the present invention is not limited to the configuration including all the described components. In addition, addition of other components to, or replacement/deletion of a part of the configuration of each embodiment is also possible.

In addition, in the above-described embodiments, control lines and information lines considered to be necessary for description are illustrated, and not all control lines and information lines of products are necessarily illustrated. In practice, it may be considered that almost all the components are connected to each other.

Reference Signs List

10 Antenna element group
20 Signal processing unit
30, 30A, 30B Data processing unit

40 Voltage adding unit
50 Power conversion unit
101r, 201r Real element
101a to 101c, 201a to 201c Virtual element
102r, 102a to 102c, 202r, 202a to 202c Reception circuit
103r, 103a to 103c, 203r, 203a to 202c A/D converter
104r, 104a to 104c, 204r, 204a to 204c Sample delay unit
105r, 105a to 105c, 205r, 205a to 205c FFT
106r, 106a to 106c, 206r, 206a to 206c Slope addition unit
107 Clock control unit
108 Delay pattern data
400, 600, 700 Phased array antenna device
500 Controller
G1, G2 Group

**Claims**

1. A phased array antenna device comprising:

   a plurality of real antenna elements;
   a signal processing unit provided for each of the real antenna elements to convert an analog signal received by the real antenna element into a digital signal and output data of the resultant signal;
   a data processing unit which is provided for each of the real antenna elements and which, for each of the real antenna element and a virtual antenna element assumed to be located within a predetermined range of the real antenna element, subjects data output from the signal processing unit to delay processing based on the positions and orientation directions of the real antenna element and the virtual antenna element; and
   an adding unit that performs addition processing of data from the plurality of real antenna elements after the delay processing and data from the plurality of virtual antenna elements after the delay processing.

2. The phased array antenna device according to claim **1,** wherein
   the predetermined range of the real antenna element is a range in which an output of a grating lobe is equal to or less than a predetermined threshold with respect to an output of a main lobe regarding a beam pattern obtained by addition processing of the respective data obtained by the real antenna element and the virtual antenna element arranged around the real antenna element.

3. The phased array antenna device according to claim 2, wherein
   the data processing unit performs delay processing on each of the real antenna element and the virtual antenna element by applying delay time corresponding to a path difference between a signal arriving at a reference real antenna element and signals arriving at the real antenna element and the virtual antenna element.

4. The phased array antenna device according to claim 3, wherein

   when the delay time is represented by t, a sampling interval at a time when an analog signal received through the real antenna element is converted into a digital signal is represented by T, a number of samples of a sampling clock is represented by n, and time is represented by $\tau$, the delay time t is represented by a formula below:

$$t = nT + \tau,$$

   and
   the same number of samples n is used for the real antenna element and the virtual antenna element within a predetermined range of the real antenna element.

5. The phased array antenna device according to claim 4, wherein
   the data processing unit includes:

   a plurality of first delay units that is respectively provided for the real antenna element and the virtual antenna element and performs sample delay processing using the sampling interval T and the number of samples n on the data of the signal received by the real antenna element and output from the signal processing unit;
a plurality of fast Fourier transform units that is respectively provided for the real antenna element and the virtual antenna element and performs fast Fourier transform on data after the sample delay processing output from a corresponding one of the plurality of first delay units; and
a plurality of second delay units that is respectively provided for the real antenna element and the virtual antenna element, and performs delay processing by adding a phase slope using the time τ on data output from a corresponding one of the plurality of fast Fourier transform units and outputs the data to the adding unit.

6. The phased array antenna device according to claim 4, wherein
the data processing unit includes:

a first delay unit that is provided for each of the real antenna elements and performs sample delay processing using the sampling interval T and the number of samples n on the data of the signal received by the real antenna element and output from the signal processing unit;
a fast Fourier transform unit that is provided for each of the real antenna elements and performs fast Fourier transform on data after the sample delay processing output from the first delay unit; and
a plurality of second delay units that is respectively provided for the real antenna element and the virtual antenna element, and performs delay processing by adding a phase slope using the time τ on data output from the fast Fourier transform unit and outputs the data to the adding unit.

7. The phased array antenna device according to claim 4, wherein
the data processing unit includes:

a fast Fourier transform unit that is provided for each of the real antenna elements and performs fast Fourier transform on data of a signal received by the real antenna element and output from the signal processing unit; and
a plurality of delay units that is respectively provided for the real antenna element and the virtual antenna element, and performs delay processing by adding a phase slope using the delay time t on data output from the fast Fourier transform unit and outputs the data to the adding unit.

FIG. 1

*FIG. 2*

FIG. 3

FIG. 4

FIG. 5

500

PROCESSOR 501

MEMORY 502

NONVOLATILE STORAGE 503

INPUT/OUTPUT INTERFACE 504

**FIG. 6**

ORIENTATION DIRECTION ($\theta$, $\phi$)

108 DELAY PATTERN DATA
107 CLOCK CONTROL UNIT

500
600

G1 GROUP OF REAL ELEMENT 1

| | RC | A/D | SAMPLE DELAY UNIT | FFT | SLOPE ADDITION UNIT |
|---|---|---|---|---|---|
| REAL ELEMENT 1 (101r) | 102r | 103r | 104r | 105r | 106r |
| VIRTUAL ELEMENT 1 (101a) | 102a | 103a | 104a | 105a | 106a |
| VIRTUAL ELEMENT 2 (101b) | 102b | 103b | 104b | 105b | 106b |
| VIRTUAL ELEMENT 3 (101c) | 102c | 103c | 104c | 105c | 106c |

G2 GROUP OF REAL ELEMENT 2

| | RC | A/D | SAMPLE DELAY UNIT | FFT | SLOPE ADDITION UNIT |
|---|---|---|---|---|---|
| REAL ELEMENT 2 (201r) | 202r | 203r | 204r | 205r | 206r |
| VIRTUAL ELEMENT 1 (201a) | 202a | 203a | 204a | 205a | 206a |
| VIRTUAL ELEMENT 2 (201b) | 202b | 203b | 204b | 205b | 206b |
| VIRTUAL ELEMENT 3 (201c) | 202c | 203c | 204c | 205c | 206c |

10  20  30A

40  50

nT  $\tau$

20

FIG. 7

EP 4 734 283 A1

FIG. 8A

FIG. 8B

FIG. 9A

FIG. 9B

EP 4 734 283 A1

FIG. 10A

FIG. 10B

REAL ELEMENT ARRANGEMENT × VIRTUAL ELEMENT ARRANGEMENT

ONLY 14 REAL ELEMENTS

810

**FIG. 11A**

(1 REAL ELEMENT + 15 VIRTUAL ELEMENTS) × 14 SETS = CORRESPONDING TO 224 ELEMENTS

1010

**FIG. 11B**

GRATING LOBE: 40% OR LESS OF MAIN LOBE

1110

GRATING LOBE: 10% OR LESS OF MAIN LOBE

1120

EP 4 734 283 A1

ONLY 14 REAL ELEMENTS

810

(1 REAL ELEMENT + 15 VIRTUAL ELEMENTS) × 14 SETS
= CORRESPONDING TO 224 ELEMENTS

1010

1210

1220

MAIN LOBE

MAIN LOBE

$el=0°$

$el=0°$

FIG. 12A

FIG. 12B

EP 4 734 283 A1

## INTERNATIONAL SEARCH REPORT

| International application No. |
|---|
| **PCT/JP2024/015389** |

**A. CLASSIFICATION OF SUBJECT MATTER**

*H01Q 3/24*(2006.01)i; *G01S 7/02*(2006.01)i
FI:   H01Q3/24; G01S7/02 216

According to International Patent Classification (IPC) or to both national classification and IPC

**B. FIELDS SEARCHED**

Minimum documentation searched (classification system followed by classification symbols)

H01Q3/24; G01S7/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-188943 A (HITACHI ASTEMO, LTD.) 13 December 2021 (2021-12-13)<br>entire text, all drawings | 1-7 |
| A | JP 2013-217884 A (HONDA ELESYS CO., LTD.) 24 October 2013 (2013-10-24)<br>entire text, all drawings | 1-7 |
| A | JP 2018-136219 A (SOKEN INC., DENSO CORP.) 30 August 2018 (2018-08-30)<br>entire text, all drawings | 1-7 |
| A | JP 2020-153871 A (PANASONIC INTELLECTUAL PROPERTY MANAGEMENT CO., LTD.) 24 September 2020 (2020-09-24)<br>entire text, all drawings | 1-7 |
| A | JP 06-209209 A (MITSUBISHI ELECTRIC CORPORATION) 26 July 1994 (1994-07-26)<br>entire text, all drawings | 1-7 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/015389**

| Patent document cited in search report | | | Publication date (day/month/year) | Patent family member(s) | | | Publication date (day/month/year) |
|---|---|---|---|---|---|---|---|
| JP | 2021-188943 | A | 13 December 2021 | WO | 2021/240927 | A1 | |
| JP | 2013-217884 | A | 24 October 2013 | US | 2013/0271311 | A1 | |
| JP | 2018-136219 | A | 30 August 2018 | US | 2019/0377059 | A1 | |
| | | | | WO | 2018/155439 | A1 | |
| JP | 2020-153871 | A | 24 September 2020 | CN | 113711442 | A | |
| | | | | JP | 2023-052852 | A | |
| | | | | US | 2022/0163623 | A1 | |
| | | | | WO | 2020/189116 | A1 | |
| JP | 06-209209 | A | 26 July 1994 | (Family: none) | | | |

Form PCT/ISA/210 (patent family annex) (July 2022)

## REFERENCES CITED IN THE DESCRIPTION

**Patent documents cited in the description**

- JP 2021093679 A